# EUROPEAN PATENT SPECIFICATION

(11) **EP 1 557 095 B1**
(45) Date of publication and mention of the grant of the patent: **04.01.2012**
(21) Application number: 03754043.2
(22) Date of filing: 08.10.2003
(51) Int. Cl.: A23L 1/10, A23L 1/16

(54) **PROCESSED CEREAL FOOD QUALITY ENHANCEMENT**
QUALITÄTSVERBESSERUNG FüR VERARBEITETE ZEREALIENNAHRUNGSMITTEL
AMELIORATION POUR ALIMENTS ELABORES A BASE DE CEREALES

(30) Priority: 29.10.2002 JP 2002314656
(43) Date of publication of application: 27.07.2005
(73) Proprietor: Fuji Oil Co., Ltd, Osaka-Shi, Osaka 542-0086 (JP)
(72) Inventor: TAKAHASHI, Taro, C/O Fuji Oil Company Limited, Tsukuba-gun, Ibaraki 300-2436 (JP); NAKAMURA, Akihiro, C/O Fuji Oil Company Limited, Tsukuba-gun, Ibaraki 300-2436 (JP); TOBE, Junko, C/O Fuji Oil Company Limited, Tsukuba-g un, Ibaraki 300-2436 (JP); YOSHIDA, Ryuji, C/O Fuji Oil Company Limited, Tsukub a-gun, Ibaraki 300-2436 (JP); MAEDA, Hirokazu, C/O Fuji Oil Company Limited, Tsukuba-gun, Ibaraki 300-2436 (JP); NAGAYASU, Keiko, C/O San-Ei Gen F.F.I., Inc., Toyonaka-shi, Osaka 561-8588 (JP); ADACHI, Norifumi, Fuji Oil Company, Ltd., Izumisano-shi Osaka 598-8540 (JP)
(74) Representative: Manaton, Ross Timothy
(86) International application number: PCT/JP2003/012915
(87) International publication number: WO 2004/039176

(56) References cited:
- EP-A1- 1 069 138
- JP-A- 9 056 350
- JP-A- 9 070 266
- JP-A- 52 156 948
- JP-A- 2001 095 514
- JP-A- 2001 275 589

## Description

### Technical Field

The present invention relates to the enhancement of processed cereal food quality and to the manufacture of processed cereal foods by addition of a quality enhancer. The invention particularly relates to a quality enhancer comprising a white potato-derived water-soluble acidic polysaccharide, and to processed cereal foods such as noodles or rice containing the added quality enhancer, whereby clouding of reconstituting water is prevented, luster is improved, stickiness is prevented, and clumping within the food is reduced and loosening is improved after storage.

### Background Art

Processed cereal foods such as noodles and processed rice foods have been associated with certain problems including dehydration of the food surfaces with time, outward migration of starches, through the lost moisture, causing loss of luster, and clumping within the foods resulting in masses which are difficult to loosen. In the case of noodles, the reconstituting water added for reconstitution tends to become cloudy. Such conditions are undesirable from a food quality standpoint, while clumping within the food not only hampers consumption and taste, but also results in non-uniform heating during the final warming just prior to consumption, thereby reducing the effectiveness of heating and lowering the processing efficiency.

Conventional methods of eliminating clumping within foods and improving loosening properties include a method of adding fats and oils or emulsified fats and oils (Japanese Unexamined Patent Publication No. 3-175940), a method of adding high HLB sucrose fatty acid esters (Japanese Examined Patent Publication No. 60-8103), a method of adding organic acids (Japanese unexamined Patent Publication No. 61-181350), a method of adding soybean-derived polysaccharides (Japanese Unexamined Patent Publication No. 6-121647), a method of adding combinations of polysaccharides and emulsifiers (Japanese Unexamined Patent Publication No. 2001-95514), a method of processing by application of mechanical vibration (Japanese Unexamined Patent Publication No. 1-101855) and the like, but addition of oils can produce oily films which are unsuitable for Japanese-style foods, while using emulsifiers results in variability of texture and loss of surface luster, addition of acids such as organic acids or their salts has an adverse effect on taste, and addition of soybean-derived polysaccharide materials results in stickiness of rice grains and noodle strands; in addition the clouding-preventing effect for soups of reconstituted noodles has been less than satisfactory.

JP 2001-275589A discloses a method aimed at eliminating the glutinousness of cooked rice, by the action of alpha-amylase. The method also seeks to prevent the deterioration of palatability over time by the action of a substance having a strong moisture retaining property, such as trehalose, pectin or collagen. JP 9-56350 A discloses the production of noodles, in which a noodle dough for an internal layer is prepared by kneading wheat flour, starch and pectin as a thickener, and noodle dough for an external layer is prepared by kneading wheat flour, starch and cellulose. JP 52-156948 A discloses frozen boiled rice products. JP 9-70266 A discloses the production of sushi rice to endure low temperature handling, involving adding a vinegar and pectin mixture to the rice, which is formed by a cold air flow into a pectinised layer on the surface of each rice grain.

It has long been known that potatoes, in particular white potatoes, contain pectinic acidic polysaccharides in addition to starches (Ullmanns Enzyklopaedie der techn. Chemie, Bd. 13, 171, Urban & Schwarzenberg, Muenchen-Berlin (1962)), and various extraction methods have been investigated using potato as a pectin starting material (Die Staerke 26 (1974) 12, 417-421, CCB 3,1 (1978) 48-50, Getreide Mehl und Brot 37, 5 (1983) 131-137, Japanese unexamined Patent Publication SHO No. 60-16140, Chem. Eng. Technol. 17 (1994) 291-300, WO97/49298). EP 1,069,138A discloses a method for production of pectin comprising hot water extraction from root vegetables, such as potatoes, under weak acidic conditions. Much research has also been conducted with regard to the use of such materials, mainly as gelling agents (ZSW Bd. 31 (1978) H. 9 349-351, Getreide Mehl und Brot 37, 5 (1983) 131-137, WO97/49298), but as yet they have not become practical.

### Disclosure of Invention

It is an object of the present invention to improve the loss of luster of processed cereal foods by preventing outward migration of starches, to eliminate clumping within foods and improve their loosening properties, and to enhance the quality of processed cereal foods by preventing clouding of reconstituting water.

As a result of much diligent research directed toward solving the aforementioned problems, the present inventors have completed this invention upon finding that white potato-derived water-soluble acidic polysaccharides have a quality-enhancing effect on processed cereal foods.

Specifically, the present invention provides the use of white potato-derived water-soluble acidic polysaccharides to enhance the quality of processed cereal foods.

The invention further provides a method of reducing clouding of reconstituting water, improving luster, reducing stickiness, reducing clumping or improving loosening after storage of a processed cereal food, comprising incorporating water-soluble acidic polysaccharides derived from white potato into the processed cereal food.

Processed cereal foods manufactured according to the invention have improved luster and loosening properties, as well as a superior effect against cloudying of reconstituting water.

### Best Mode for Carrying out the Invention

In the invention, a processed cereal food is a primary processed or secondary processed cereal or cereal food (rice, barley rice, etc.). As primary processed cereal foods there may be mentioned butter rice, millet cake, dry noodles, raw noodles, pasta, buckwheat noodles and the like, and as a secondary processed food there may be mentioned such foods which have been re-processed, regardless of whether or not the primary processed foods have been seasoned, such as rice balls, pilafs, mixed rice, seasoned instant ramen noodles and the like.

Such processed cereal foods include those which are prepared in the home, as well as final products intended to be consumed on the spot and semi-prepared foods which require preparation before consumption; they also include foods distributed on the market by ordinary temperature, refrigerated, frozen and ice-cooled methods.

White potato-derived water-soluble acidic polysaccharides used for the invention (hereinafter referred to as "acidic white potato polysaccharides") are extracted using white potatoes as the starting material, and particularly the residue remaining after removing the starches, oligosaccharides and other sugars, proteins and the like by ordinary procedures. They may be obtained by hot water extraction in the weakly acidic range of pH 3-7 and preferably pH 4-6, at a temperature of preferably between 80-130°C and more preferably between 100-130°C, and fractionation of the water-soluble fraction, followed by direct drying or drying after, for example, enzyme treatment, surfactant treatment, active carbon treatment, resin adsorption treatment or ethanol precipitation treatment, for removal of contaminating starches or low molecular substances.

The acidic white potato polysaccharides obtained in this manner have a composition consisting of 70% or more saccharides (including starches), while also containing crude ash, crude protein and the like. They typically contain uronic acids as constituent saccharides.

Incidentally, although starches are saccharides, they are contaminants from the standpoint of the acidic polysaccharides of the invention, and the acidic white potato polysaccharides of the invention exhibit a stronger function if the acidic polysaccharide purity is increased by removal of the contaminating starches during extraction. The contaminating starches are preferably present at no greater than 60%, more preferably no greater than 30% and even more preferably no greater than 10%, according to measurement of the content by quantitation using iodine. A publicly known method may be used for removal of the starches, and for example, there may be mentioned enzyme decomposition, or washing removal from the starting material by water at below 100°C and separation of the insoluble portion in the extract.

The starting material for the acidic white potatoes polysaccharides may be raw or dried white potatoes, but from the standpoint of industrial applicability including solubility and cost for handling, it is preferred to use raw or dried starch residue obtained as a by-product of industrial processing of starch.

Next, the acidic white potato polysaccharides are added to a cereal food or processed cereal food; the following methods may be mentioned as examples of methods for surface treatment of a cereal food or processed cereal food from acidic white potato polysaccharides.
A. The acidic white potato polysaccharides are added to pre-washed rice, the water is measured in and the rice is cooked. The cooked rice is then further treated with the acidic white potato polysaccharides.
B. The acidic white potato polysaccharides are pre-added to water or hot water for boiling of noodles or pasta.
C. An aqueous solution of the acidic white potato polysaccharides is mixed with cooked or steamed rice or boiled noodles or pasta for surface treatment.
D. An aqueous solution of the acidic white potato polysaccharides is sprayed beforehand onto a formed cereal food such as pilaf for surface treatment, prior to freezing or heating.
E. The acidic white potato polysaccharides are predissolved in a preparation solution and the preparation solution is mixed with noodles or cooked rice for surface treatment.
F. Powder of acidic white potato polysaccharides is directly added to cooked or steamed rice or boiled noodles or pasta for surface treatment.
G. The acidic white potato polysaccharides are added to and kneaded with noodle or pasta dough.

These methods are effective for the individual foods mentioned above, but the more effective addition or surface treatment methods are, in most cases, the methods of pre-adding acidic white potato polysaccharides to rice cooking water or to the cold or hot water for boiling of noodles or pasta according to A. to C. above, and the methods of mixing acidic white potato polysaccharide aqueous solutions with noodles, pasta or cooked rice for surface treatment.

The amount of addition is preferably 0.003-1.0 wt%, more preferably 0.035-0.5 wt% and even more preferably 0.08-0.2 wt% using uronic acids for reference, with respect to the cereal food or processed cereal food.

The methods described above may be used for treatment of processed cereal foods with a processed cereal food quality enhancer of the invention, for excellent effects which improve the loosening property of processed cereal foods, avoid clumping of noodle strands and cooked rice grains, ensure satisfactory yields without outward migration of moisture, improve the luster of noodle strands and rice grains, and prevent clouding of the boiling water used for reconstitution. These effects are believed to be exhibited primarily because outward migration of starches onto the surface of the cereal food surface is prevented.

Improving the loosening property of processed cereal foods facilitates consumption of the food and gives the food a superior taste, while also preventing non-uniform heating during re-preparation and improving heating efficiency, thereby yielding an optimum food in minimal time.

In addition, the features and effects of processed cereal foods obtained by adding acidic white potato polysaccharides or by surface treatment with acidic white potato polysaccharides include the ability to eliminate the stickiness of cooked rice grains and noodle strands which occurs when other polysaccharide substances are added, to eliminate the dry feel which results when using emulsifiers, to maintain surface luster, to minimize reduction in noodle and rice quality, to ensure continuation of the effects even during prolonged storage, to avoid oily film production such as occurs with addition of oils, to allow adaptability to Japanese-style foods, and to eliminate the requirement for special equipment since the addition method is a simple one.

In the invention, the acidic white potato polysaccharides may be used alone but may also be used in combination with other appropriate additives. As other additives there may be mentioned emulsifiers such as lecithin or glycerin fatty acid esters, sucrose fatty acid esters, polyoxyethylene sorbitan fatty acid esters and the like, ordinary animal and vegetable fats and oils or tocopherol and other fat-soluble vitamins, polysaccharides such as dextrin, agar, carrageenan, furcelleran, tamarind seed polysaccharide, tara gum, karaya gum, pectin, xanthan gum, sodium alginate, tragacanth gum, guar gum, locust bean gum, pullulan, gelan gum, gum arabic, water-soluble soybean polysaccharides, hyaluronic acid, cyclodextrin, chitosan, carboxymethyl cellulose (CMC), alginic acid propyleneglycol ester, curdlan, gum ghatti, psyllium seed gum and the like, or hydrolysates of these polysaccharides, as well as various starches, processed starches, decomposed starches, sugar alcohols and the like; however, there is no limitation to these so long as the polysaccharides are from starches derived from tubers, subterranean roots, grains or beans which are used for ordinary foods. As examples there may be mentioned corn, waxy corn, wheat, rice, white potato, sweet potato, tapioca and the like, among which corn, waxy corn and tapioca are preferred. Such starches may also be used in combinations of two or more different types. The starches may also be degraded, pregelatinized, derivatized and fractionated, or they may be subjected to physical processing. As examples there may be mentioned starch sugars, dextrin roasted starch, oxidized starch, acid-treated starch, alkali-treated starch, enzyme-treated starch, pregelatinized starch, esterified starch, etherified starch, grafted starch, crosslinked starch, amylose, amylopectin, moist heated starch and the like. Preferred are dextrin roasted starch, oxidized starch, acid-treated starch, alkali-treated starch, enzyme-treated starch, esterified starch, etherified starch, grafted starch and crosslinked starch, and particularly preferred are oxidized starch, acid-treated starch, alkali-treated starch and enzyme-treated starch. There may also be used combinations of two or more different types of starch obtained by different chemical modification or processing methods. There may also be mentioned proteins including gelatin, whey and other types of albumin, casein sodium, soluble collagen, egg white, egg yolk and soybean protein, salts including calcium fortifiers, and organic acids including citric acid and lactic acid, or salts thereof.

The present invention will now be explained in greater detail by examples, which are only illustrative and not intended to restrict the scope of the invention in any way. The "%" values throughout the examples are based on weight.

### Production Example 1

### Preparation of acidic white potato polysaccharides (A)

After suspending 50 g of dried white potato starch residue (13% moisture content, 42% starch content (solid)) in 950 g of water, the pH was adjusted to 4.5 with hydrochloric acid and the suspension was heated at 120°C for 30 minutes for extraction of the water-soluble acidic polysaccharides. Upon cooling, it was centrifuged (10,000 g x 30 minutes) for separation into a polysaccharide extract and a precipitate. An equivalent amount of water was added to the separated precipitate prior to further centrifugation, and the supernatant liquid was combined with the previous polysaccharide extract and dried to yield acidic white potato polysaccharides (A).

### Production Example 2

### Preparation of acidic white potato polysaccharides (B)

After suspending 500 g of dried white potato starch residue (trade name: Paselli-FP, AVEBE Corp., 12% moisture content, 19% starch content (solid)) in 9500 g of water, the pH was adjusted to 4.5 with hydrochloric acid and the suspension was heated at 120°C for 30 minutes for extraction of the water-soluble acidic polysaccharides. Upon cooling, it was centrifuged (10,000 g x 30 minutes) for separation into a polysaccharide extract and a precipitate. An equivalent amount of water was added to the separated precipitate prior to further centrifugation, and the supernatant liquid was combined with the previous polysaccharide extract and dried to yield acidic white potato polysaccharides (B).

### Production Example 3

### Preparation of acidic white potato polysaccharides (C)

After suspending 500 g of dried white potato starch residue (trade name: POTEX, Lyckeby Starkelsen, 5% moisture content, 7% starch content (solid)) in 9500 g of water, the pH was adjusted to 4.5 with hydrochloric acid and the suspension was heated at 120°C for 30 minutes for extraction of the water-soluble acidic polysaccharides. Upon cooling, it was centrifuged (10,000 g x 30 minutes) for separation into a polysaccharide extract and a precipitate. An equivalent amount of water was added to the separated precipitate prior to further centrifugation, and the supernatant liquid was combined with the previous polysaccharide extract and dried to yield acidic white potato polysaccharides (C).

### Production Example 4

### Preparation of acidic white potato polysaccharides (D)

After adding 40 units of starch saccharogenic enzyme (Amyloglucosidase^{™}, Novo Corp.) (where 1 unit is the amount of enzyme which decomposes 1 µmole of maltose in 1 minute) was added to a crude polysaccharide solution obtained in the same manner as Production Example 2, and the enzyme was allowed to act for 1 hour at 50°C. After completion of the reaction, heat treatment was carried out at 90°C for 10 minutes for inactivation of the enzyme, and then ethanol was added to the filtered saccharified solution at an alcohol concentration of 80% for precipitate purification treatment. The recovered precipitate was dried to yield acidic white potato polysaccharides (D).

The results of analyzing each of the obtained acidic white potato polysaccharides are summarized in Table 1 below. The total sugars were measured by the phenol sulfate method, the uronic acid content was measured by the Blumenkrantz method, and the starch content was measured by the iodine coloration method.

**Table 1**

| (compositional proportion of acidic white potato polysaccharides) | | | | |
|---|---|---|---|---|
| Component | Production Example 1 | Production Example 2 | Production Example 3 | Production Example 4 |
| Moisture (%) | 7.2 | 9.6 | 5.9 | 15.7 |
| Crude protein (dry%) | 1.2 | 3.4 | 5.4 | 3.0 |
| Crude ash (dry%) | 2.7 | 6.9 | 10.4 | 5.6 |
| Total sugars (dry%) | 91.4 | 82.1 | 75.2 | 71.4 |
| Uronic acid (dry%) | 12.3 | 23.9 | 29.7 | 37.5 |
| Starch (dry%) | 58.2 | 34.7 | 23.7 | 1.0 |

### Example 1 (Udon (wheat noodle) test)

### Method

Frozen udon noodles (product of Katokichi Co., Ltd.) were boiled in water and then rinsed and drained, and polysaccharide samples were added to the udon noodles in the amounts shown in Table 2 below. The amounts of acidic white potato polysaccharides added were equivalent to 0.1% uronic acid addition, using the uronic acid contents of the acidic white potato polysaccharides as reference. The addition was carried out by dropwise addition of 5 g of the test solution (the solution having a prescribed amount of acidic white potato polysaccharides added) to 100 g of drained udon noodles. After addition, the mixture was allowed to stand overnight at 5°C, and then subjected to an organoleptic evaluation. The results are shown in Table 3.

**Table 2**

| Test No. | Sample | Amount added | Uronic acid content |
|---|---|---|---|
| 1 | Not added | - | - |
| 2 | Acidic white potato polysaccharide (A) | 0.81% | 0.10% |
| 3 | Acidic white potato polysaccharide (B) | 0.42% | 0.10% |
| 4 | Acidic white potato polysaccharide (C) | 0.34% | 0.10% |
| 5 | Acidic white potato polysaccharide (D) | 0.27% | 0.10% |

**Table 3 (Organoleptic evaluation results)**

| Test No. | Appearance | Loosening property | Condition of noodles |
|---|---|---|---|
| 1 | 3 | 5 | Standard of appearance. Noodles completely failed to loosen, removed as clumps. |
| 2 | 4 | 3 | More easily loosened, but slight loss of luster compared to unadded product. |
| 3 | 3 | 2 | Very easily loosened, but weak effect on luster. |
| 4 | 2 | 2 | Very easily loosened, slightly improved luster. |
| 5 | 1 | 1 | Very good luster, no adhesion of noodle strands, very easily loosened. |

| | | | |
|---|---|---|---|
| Evaluation scale Appearance: 1 (Good luster)...3 (standard)...5 (poor luster) Ease of loosening: 1 (easy to loosen)...5 (difficult to loosen) | | | |

The udon noodles to which the acidic white potato polysaccharides had been added at 0.10% in terms of uronic acid content used for reference all had improved loosening properties compared to the unadded products. However, differences were observed in the effect of the starch content on luster. From the standpoint of only an effect of improved loosening property a starch content of no greater than 60% is sufficient, but a starch content of 30% or below is appropriate if the goal is also to improve the noodle luster. A starch content of below 10% further improved the noodle quality, resulting in an even more notable loosening effect and luster.

### Example 2 (Udon noodle test: Effect of acidic white potato polysaccharide addition amount)

### Method

Frozen udon noodles (product of Katokichi Co., Ltd.) were boiled in water and then rinsed and drained, and the acidic white potato polysaccharides (D) were added as samples to the udon noodles in the amounts shown in Table 4 below. The addition was carried out in the same manner as Example 1. After the addition, the mixture was allowed to stand overnight at 5°C, and then subjected to an organoleptic evaluation. The results are shown in Table 5.

**Table 4**

| Test No. | Sample | Amount added | Uronic acid content |
|---|---|---|---|
| 1 | Not added | - | - |
| 2 | Acidic white potato polysaccharide (D) | 0.0053% | 0.002% |
| 3 | Acidic white potato polysaccharide (D) | 0.0080% | 0.003% |
| 4 | Acidic white potato polysaccharide (D) | 0.027% | 0.01% |
| 5 | Acidic white potato polysaccharide (D) | 0.053% | 0.02% |
| 6 | Acidic white potato polysaccharide (D) | 0.080% | 0.03% |
| 7 | Acidic white potato polysaccharide (D) | 0.16% | 0.06% |
| 8 | Acidic white potato polysaccharide (D) | 0.21% | 0.08% |
| 9 | Acidic white potato polysaccharide (D) | 0.27% | 0.1% |
| 10 | Acidic white potato polysaccharide (D) | 0.53% | 0.2% |
| 11 | Acidic white potato polysaccharide (D) | 0.80% | 0.3% |
| 12 | Acidic white potato polysaccharide (D) | 1.33% | 0.5% |
| 13 | Acidic white potato polysaccharide (D) | 2.67% | 1.0% |

**Table 5 (Organoleptic evaluation results)**

| Test No. | Appearance | Loosening property | Condition of noodles |
|---|---|---|---|
| 1 | 3 | 5 | Based on appearance. Noodles completely failed to loosen, removed as clumps. |
| 2 | 3 | 5 | Approximately same as evaluation results for Test No.1. |
| 3 | 3 | 4 | Luster, somewhat easily loosened. |
| 4 | 3 | 4 | Luster, somewhat easily loosened. |
| 5 | 3 | 4 | Luster, somewhat easily loosened. |
| 6 | 2 | 3 | Luster better than unadded product, easily loosened. |
| 7 | 2 | 3 | Luster better than unadded product, easily loosened. |
| 8 | 2 | 2 | Luster better than unadded product, very easily loosened. |
| 9 | 1 | 1 | Very good luster, no adhesion of noodle strands, very easily loosened. |
| 10 | 1 | 1 | Very good luster, no adhesion of noodle strands, very easily loosened. |
| 11 | 2 | 1 | Somewhat notable luster, no adhesion of noodle strands, very easily loosened. |
| 12 | 2 | 1 | Somewhat notable luster, no adhesion of noodle strands, very easily loosened. |
| 13 | 3 | 1 | Residue of sample solution in sections, no adhesion of noodle strands, very easily loosened. |

| | | | |
|---|---|---|---|
| Evaluation scale Appearance: 1 (Good luster)...3 (standard)...5 (poor luster) Ease of loosening: 1 (easy to loosen)...5 (difficult to loosen) | | | |

The udon noodles to which the acidic white potato polysaccharides had been added at 0.003% in terms of uronic acid content for reference all had improved appearances (luster) and loosening properties compared to the unadded products. However, an uronic acid content of above 0.3% reduced the manageability for surface treatment, while a content of above 1.0% resulted in residue of the sample solution on sections of the noodles after addition.

### Example 3 (Frozen chicken pilaf)

After removing the bone from 250 g of chicken, it was cut into 2 cm square pieces and seasoned with salt and pepper. Onion was preheated in a microwave oven for blanching, and cut to 1 cm square pieces. Bell pepper was lightly boiled and cut to the same size. The chicken was pan-fried on a high flame, and a small amount of white wine poured in. Butter was added, the onion and bell pepper were lightly pan-fried, and there was then added thereto cooked rice (2 cups) which had been surface treated by mixing in a prepared solution of 2.2 g of the acidic white potato polysaccharides (D) in 100 g of demi-glace sauce and 80 g of bouillon, after which pan frying was continued until the disappearance of the water.

The finished chicken pilaf was allowed to cool to room temperature and filled into a container for frozen storage. A necessary amount for consumption was removed and then heated in a microwave oven or refried in a frying pan. The prepared pilaf readily loosened and heated uniformly in a short time, with a favorable taste. Even upon cooling after cooking, it did not stick and still had a favorable taste. Also, as the frozen product loosened readily, it was easy to dispense in a necessary amount.

### Example 4 (Retort udon noodles)

Frozen udon noodles (product of Katokichi Co., Ltd.) were boiled in water and then immediately immersed for one minute in a 5% aqueous solution of acidic white potato polysaccharides (D) which had been heated to 50°C, for surface treatment. The water was drained, and the noodles were packed into a retort pouch and subjected to retort sterilization (120°C, 10 minutes), and then stored at ordinary temperature for one week. The degree of adhesion of the acidic white potato polysaccharides (D) caused by surface treatment was 0.22% with respect to the udon noodle weight. For comparison, the same treatment was carried out using water-soluble soybean polysaccharides (SOYAFIBE-S-DN: product of Fuji Oil Co., Ltd.) instead of the acidic white potato polysaccharides (D). The hot soups of the two udon noodle products were poured in before consumption to prepare instant udon noodles. Both loosened satisfactorily, heated uniformly and had favorable tastes. However, the product which had been surface treated with water-soluble soybean polysaccharides yielded a somewhat cloudy soup. In contrast, the product which had been surface treated with the acidic white potato polysaccharides had no soup cloudiness and a very excellent appearance.

### Example 5 (Chinese noodles)

After boiling raw Chinese noodles (product of Toyo Suisan Kaisha, Ltd.) with water and cooling them with running water, the noodles were placed on ice and allowed to shrink. The water was then drained and surface treated by immersion for 30 seconds in a 2% aqueous solution of acidic white potato polysaccharides (D) (containing 0.8% lactic acid). The thoroughly drained noodles were packed into a retort pouch and sterilized for 5 minutes in a boiling water bath. The degree of adhesion of the acidic white potato polysaccharides (D) caused by surface treatment was 0.12% with respect to the Chinese noodle weight. For comparison, the same treatment was carried out using water-soluble soybean polysaccharides (SOYAFIBE-S-DN: product of Fuji Oil Co., Ltd.) instead of the acidic white potato polysaccharides (D). The two Chinese noodle products were reconstituted before consumption. Both Chinese noodle products loosened satisfactorily, since the noodles loosened during reconstitution even without using chopsticks, and also heated uniformly and had favorable tastes. However, the product which had been surface treated with water-soluble soybean polysaccharides yielded a somewhat cloudy soup. In contrast, the product which had been surface treated with the acidic white potato polysaccharides had no soup cloudiness and a very excellent appearance.

### Example 6 (Instant fried noodles)

Acidic white potato polysaccharides (D) were added to sauce packaged with commercially available dry instant fried noodles in an amount of 0.3% with respect to the dry noodle weight. When the instant fried noodles were prepared according to an ordinary method and consumed, the noodles were free of stickiness and had an excellent flavor. Even with the passage of time, no stickiness was observed and the taste was satisfactory.

### Example 7 (Butter rice)

Butter was melted in a thick pan, and finely diced onions were lightly fried therein. After adding 300 g of washed rice, there were added 1.8 g of the acidic white potato polysaccharides (D) and 600 ml of bouillon, and the mixture was steamed. The butter rice prepared in this manner was free of stickiness independently of preparation skill, loosened satisfactorily, had a pleasant flavor and was compatible with accompanying dishes. In addition, the rice was successfully storable without loss of these effects whether by freeze storage or retort heating, and re-preparation was simple.

### Example 8 (Macaroni gratin)

Boiled macaroni was surface treated by immersion for 1 minute in a 1.5% aqueous solution of acidic white potato polysaccharides (D) heated to 60°C, and then packed into a retort pouch for retort sterilization (120°C, 10 minutes). The degree of adhesion of the acidic white potato polysaccharides (D) caused by surface treatment was 0.08% with respect to the macaroni weight. The macaroni was then removed from the pouch for use and rapidly combined with white sauce and baked in an oven to prepare macaroni gratin. The macaroni of the gratin loosened satisfactorily, and separated well from the pouch. This suggested that it can be effectively used as a household instant food or for volume sales.

### Industrial Applicability

By adding a processed cereal food quality enhancer comprising acidic white potato polysaccharides, in a use or method according to the invention, to a processed cereal food for surface treatment of the food with the enhancer, it is possible to provide a processed cereal food with enhanced quality, which exhibits effects such as a satisfactory loosening property, no clumping between noodle strands or rice grains, no outward migration of moisture, satisfactory yields, good luster of the noodle strands and rice grains, and minimal clouding of reconstituting water. Additional excellent effects are also exhibited, in that sticking between rice grains and noodle strands which occurs when adding other polysaccharide substances is avoided, the dry feel which occurs when using emulsifiers does not result, surface luster is maintained, reduction in noodle and rice quality is minimal, the effects continue even during prolonged storage, oil films which are seen with addition of oils do not form, the foods are suitable as Japanese style foods, and the simplicity of the addition method eliminates the requirement for special equipment.

## Claims

1. The use of white potato-derived water-soluble acidic polysaccharides to enhance the quality of processed cereal foods.

2. A method of reducing clouding of reconstituting water, improving lustre, reducing stickiness, reducing clumping or improving loosening after storage of a processed cereal food, comprising incorporating water-soluble acidic polysaccharides derived from white potato into the processed cereal food.

3. A method according to claim 2, wherein the processed cereal food is a primary processed food selected from butter rice, millet cake, dry noodles, raw noodles, pasta and buckwheat noodles.

4. A method according to claim 2, wherein the processed cereal food is a secondary processed food selected from rice balls, pilafs, mixed rice and seasoned instant ramon noodles.

5. A method according to any of claims 2 to 4, wherein the water-soluble acidic polysaccharides are obtained from white potatoes by hot-water extraction at pH 3-7 of the residue remaining after removal of starches, oligosaccharides and other sugars and proteins and contain 70% or more saccharides.

6. A method according to any of claims 2 to 5, wherein the water-soluble acidic polysaccharides contain no more than 30% starches.

7. A method according to any of claims 2 to 6, wherein the water-soluble acidic polysaccharides are used in an amount from 0.035 to 0.5 wt % (calculated as uronic acid) based on the processed cereal food.

## Patentansprüche

1. Verwendung von wasserlöslichen sauren Polysacchariden, die aus weißen Kartoffeln stammen, zur Verbesserung der Qualität von verarbeiteten Getreide-Nahrungsmitteln.

2. Verfahren zur Verringerung der Trübung von Wiederherstellungswasser, zur Verbesserung des Glanzes, zur Verringerung der Klebrigkeit, zur Verringerung der Verklumpung oder zur Verbesserung der Auflockerung nach der Lagerung eines verarbeiteten Getreide-Nahrungsmittels, aufweisend ein Inkorporieren von wasserlöslichen sauren Polysacchariden, die aus weißen Kartoffeln stammen, in das verarbeitete Getreide-Nahrungsmittel.

3. Verfahren nach Anspruch 2, bei dem das verarbeitete Getreide-Nahrungsmittel ein primäres verarbeitetes Nahrungsmittel ist, das ausgewählt ist aus Butterreis, Hirsekuchen, Trockennudeln, Rohnudeln, Teigwaren und Buchweizennudeln.

4. Verfahren nach Anspruch 2, bei dem das verarbeitete Getreide-Nahrungsmittel ein sekundäres verarbeitetes Nahrungsmittel ist, das ausgewählt ist aus Reisbällchen, Pilaus. Mischreis und gewürzen Ramon-Instantnudeln.

5. Verfahren nach einem der Ansprüche 2 bis 4, bei dem die wasserlöslichen sauren Polysaccharide aus weißen Kartoffeln erhalten werden durch Heißwasserextraktion des Rückstands, der nach der Entfernung von Stärken, Oligosacchariden und anderen Zuckern und Proteinen zurückbleibt, bei pH 3 bis 7, und 70 % oder mehr Saccharide enthalten.

6. Verfahren nach einem der Ansprüche 2 bis 5, bei dem die wasserlöslichen sauren Polysaccharide nicht mehr als 30 % Stärken enthalten.

7. Verfahren nach einem der Ansprüche 2 bis 6, bei dem die wasserlöslichen sauren Polysaccharide in einer Menge von 0,035 bis 0,5 Gew.-% (berechnet als Uronsäure), auf der Basis des verarbeiteten Getreide-Nahrungsmittels, verwendet werden.

## Revendications

1. Utilisation de polysaccharides acides solubles dans l'eau dérivés de la pomme de terre à chair blanche pour amplifier la qualité d'aliments céréaliers transformés.

2. Procédé pour réduire la turbidité de l'eau de reconstitution, améliorer le lustre, réduire le collant, réduire l'agglomération ou améliorer la fluidité après stockage d'un aliment céréalier transformé, comprenant l'incorporation de polysaccharides acides solubles dans l'eau dérivés de la pomme de terre à chair blanche dans l'aliment céréalier transformé.

3. Procédé selon la revendication 2, dans lequel l'aliment céréalier transformé est un aliment ayant subi une transformation primaire choisi parmi le riz au beurre, le gâteau de millet, les nouilles sèches, les nouilles crues, les pâtes et les nouilles de sarrasin.

4. Procédé selon la revendication 2, dans lequel l'aliment céréalier transformé est un aliment ayant subi une transformation secondaire choisi parmi les boulettes de riz, les pilafs, le riz mélangé et les nouilles Ramon instantanées assaisonnées.

5. Procédé selon l'une quelconque des revendications 2 à 4, dans lequel les polysaccharides acides solubles dans l'eau sont obtenus à partir de pommes de terre à chair blanche par extraction à l'eau chaude et à un pH de 3 à 7 du résidu restant après élimination des amidons, des oligosaccharides et d'autres sucres et protéines, et contiennent 70 % de saccharides ou plus.

6. Procédé selon l'une quelconque des revendications 2 à 5, dans lequel les polysaccharides acides solubles dans l'eau contiennent au plus 30 % d'amidons.

7. Procédé selon l'une quelconque des revendications 2 à 6, dans lequel les polysaccharides acides solubles dans l'eau sont utilisés en une quantité de 0,035 à 0,5 % en poids (calculés en acide uronique) sur la base de l'aliment céréalier transformé.
